# FASCICULE DE BREVET EUROPEEN

(11) **EP 2 771 140 B1**
(45) Date de publication et mention de la délivrance du brevet: **01.03.2017**
(21) Numéro de dépôt: 12790611.3
(22) Date de dépôt: 24.10.2012
(51) Int. Cl.: C22C 19/05, B22F 3/105, B22F 5/00, B22F 5/04, B22F 7/08, B22D 19/00, B22D 19/04, B22D 19/08, F04D 29/32

(54) **PROCEDE DE FABRICATION D'UNE PIECE METALLIQUE POUR TURBOREACTEUR D'AERONEFS**
VERFAHREN ZUR HERSTELLUNG EINES METALLTEILS FÜR EINEN FLUGZEUG-TURBOMOTOR
METHOD FOR PRODUCING A METAL PART FOR AN AIRCRAFT TURBO-ENGINE

(30) Priorité: 26.10.2011 FR 1159733
(43) Date de publication de la demande: 03.09.2014
(73) Titulaire: Snecma, 75015 Paris (FR)
(72) Inventeur: VILARO, Thomas, F-77550 Moissy-Cramayel Cedex (FR); RIX, Sébastien, F-77550 Moissy-Cramayel Cedex (FR); BAUDIMONT, Cyrille, F-77550 Moissy-Cramayel (FR)
(74) Mandataire: Camus, Olivier Jean-Claude
(86) Numéro de dépôt international: PCT/FR2012/052436
(87) Numéro de publication internationale: WO 2013/060981

(56) Documents cités:
- DE-A1- 19 537 264
- DE-B3-102007 039 035
- DE-U1-202007 004 683
- JP-A- 2005 171 299
- US-A1- 2004 140 078
- US-A1- 2010 304 064
- US-A1- 2011 042 031

## Description

### DOMAINE TECHNIQUE DE L'INVENTION

La présente invention concerne un procédé de fabrication d'une pièce métallique utilisée dans les turboréacteurs d'aéronefs. Sans être limitatif, la pièce métallique considérée est avantageusement par exemple une turbine haute pression, ou une turbine basse pression de turboréacteur ; mais le procédé selon l'invention peut s'appliquer à toute pièce métallique présentant des parties fines, avec une épaisseur ne dépassant pas quelques millimètres, associées avec des parties plus épaisses, présentant une épaisseur de quelques centimètres.

Le domaine technique de l'invention est donc, d'une façon générale, celui des moteurs d'aéronef, et plus particulièrement celui de la fabrication de pièces métalliques formant lesdits moteurs.

### ARRIERE PLAN TECHNOLOGIQUE DE L'INVENTION

Un procédé particulier est privilégié pour fabriquer aujourd'hui certaines pièces métalliques pour les turboréacteurs d'aéronefs ; il réside dans un procédé par fusion sélective d'une poudre au moyen d'un faisceau dirigé, de type faisceau laser ou faisceau d'électrons. Un tel procédé est connu sous les noms de Direct Metal Laser Sintering, Selective Laser Melting ou Electron Beam Melting.

Un tel procédé consiste à fabriquer une pièce métallique par fusion de couches successives de poudre au moyen d'un faisceau laser ou au moyen d'un faisceau d'électrons commandé par un système de traitement de l'information dans lequel on a enregistré les coordonnées tridimensionnelles des points des couches successives à réaliser. De façon pratique, on dispose dans une cuve dont le fond est formé par un plateau mobile en translation, une première couche de poudre à l'aide d'un racleur ou d'un rouleau. La couche présente alors une surface inférieure correspondant à la surface du plateau et une surface supérieure sur laquelle est dirigé et déplacé le faisceau laser ou le faisceau d'électrons. L'énergie apportée par ce faisceau provoque la fusion locale de la poudre qui, en se solidifiant, forme une première couche de la pièce métallique. Après formation de cette première couche, le plateau est descendu d'une distance correspondant à l'épaisseur d'une couche, puis une seconde couche de poudre est amenée par le racleur sur la couche précédente. De la même manière que précédemment, une seconde couche de la pièce métallique est formée à l'aide du faisceau.

Ces opérations sont répétées jusqu'à fabrication complète de la pièce.

Un tel procédé de fabrication permet d'écourter de manière significative les temps et les coûts de développement des pièces métalliques ainsi fabriquées.

Cependant, pour les pièces métalliques présentant des parties d'épaisseur relativement importantes, un tel procédé de fabrication demeure lent : en effet, chacune des différentes couches successives présente une épaisseur comprise entre vingt et cent micromètres, et le nombre de passages de la source énergétique de type faisceau laser ou faisceau d'électrons est donc élevé.

La durée de fabrication de certaines pièces, par exemple les sections de turbines haute pression et/ou basse pression est ainsi tributaire de paramètres tels que la vitesse de balayage du faisceau, sa puissance, l'épaisseur de chacune des couches superposées, le taux de recouvrement des passages du laser... Cette durée de fabrication peut ainsi atteindre quatre-vingt cinq heures.

Par ailleurs, un bain liquide se forme lors de l'interaction entre le faisceau laser ou à électrons et le lit de poudre ; ce bain liquide est, au cours du processus de fabrication, relativement agité, et il est fréquent que des particules ou éjections soient éjectées dudit bain liquide. Ces particules ou éjections retombent alors sur la surface qui doit subir le passage suivant du faisceau, ce qui peut être à l'origine de défauts de fabrication, défauts susceptibles de directement impacter la tenue mécanique de la pièce. De telles éjections sont favorisées par un nombre important de passage du faisceau sur une même zone.

Afin de tenter d'apporter une solution aux problèmes qui viennent d'être évoqués, on a proposé différentes solutions dans l'état de la technique.

Une première solution réside dans la fabrication des pièces métalliques par usinage à partir d'un bloc de matière ; mais dans le cadre du développement de ces pièces, au cours duquel leur géométrie est susceptible d'être fréquemment modifiée, une telle solution n'est pas adaptée ; il serait en effet alors nécessaire d'adapter, pour chacune des pièces considérées, notamment le cycle d'usinage et les outils de positionnement de la pièce.

Une seconde solution consiste à fabriquer la pièce par fonderie. Une telle solution peut s'avérer intéressante uniquement pour des pièces réalisées en grand nombre, car le moule à utiliser est très coûteux. Une telle solution n'est absolument pas rentable dans le cadre du développement d'un turboréacteur au cours duquel la géométrie des pièces considérées peut constamment évoluer.

### DESCRIPTION GENERALE DE L'INVENTION

L'objet de l'invention offre une solution aux problèmes qui viennent d'être exposés, en proposant un procédé de fabrication de pièces métalliques faisant intervenir partiellement une technique de fusion sélective par faisceau laser ou par faisceau d'électrons, tout en limitant l'utilisation de cette technique pour s'affranchir des principaux défauts qu'elle était susceptible de présenter, notamment une grande lenteur de fabrication de la pièce, et le risque d'apparition de défauts mécanique sur la pièce fabriquée dus à la présence d'éjection lors du passage du faisceau sur la poudre. En outre, le procédé selon l'invention est peu coûteux à mettre en oeuvre, y compris pour des pièces dont la géométrie au cours d'un processus de développement est susceptible d'évoluer relativement fréquemment.

L'invention concerne le procédé de la revendication 1.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- le procédé comporte l'étape supplémentaire consistant à former les éléments du premier ensemble d'éléments par fusion sélective d'une poudre par balayage de la surface de la couche de poudre avec le faisceau laser ou avec le faisceau d'électrons ;
- l'étape consistant à former la partie périphérique des éléments du deuxième ensemble d'éléments et l'étape consistant à former les éléments du premier ensemble d'éléments sont réalisées avant l'opération de remplissage de la zone intérieure limitée par la partie périphérique des éléments du deuxième ensemble d'éléments ;
- la partie périphérique des éléments du deuxième ensemble d'éléments formée par fusion sélective de poudre définit un volume ouvert ;
- la partie périphérique des éléments du deuxième ensemble d'éléments formée par fusion sélective de poudre définit un volume fermé présentant au moins un orifice ;
- le procédé comporte l'étape supplémentaire consistant à, préalablement à l'opération de remplissage de la zone intérieure limitée par la partie périphérique des éléments du deuxième ensemble d'éléments, retirer la poudre non utilisée lors de l'étape de formation de la partie périphérique des éléments du deuxième ensemble d'éléments par fusion sélective de ladite poudre ;
- les éléments du deuxième ensemble d'éléments sont des plateformes d'une turbine de compresseur de turbomachine pour aéronefs, et les éléments du premier ensemble d'éléments sont des pales formant rayons de raccordement entre lesdites plateformes.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :
- à la figure 1, une vue schématique d'une installation permettant de réaliser une opération de fusion sélective de poudre ;
- à la figure 2, un exemple de pièce métallique réalisable par la mise en oeuvre du procédé selon l'invention ;
- à la figure 3, une représentation de la pièce métallique de la figure 2 dans une première étape de fabrication par le procédé selon l'invention ;
- à la figure 4, une représentation de la pièce métallique de la figure 2 dans une deuxième étape de fabrication par le procédé selon l'invention.

### DESCRIPTION DETAILLEE D'AU MOINS UN MODE DE REALISATION DE L'INVENTION

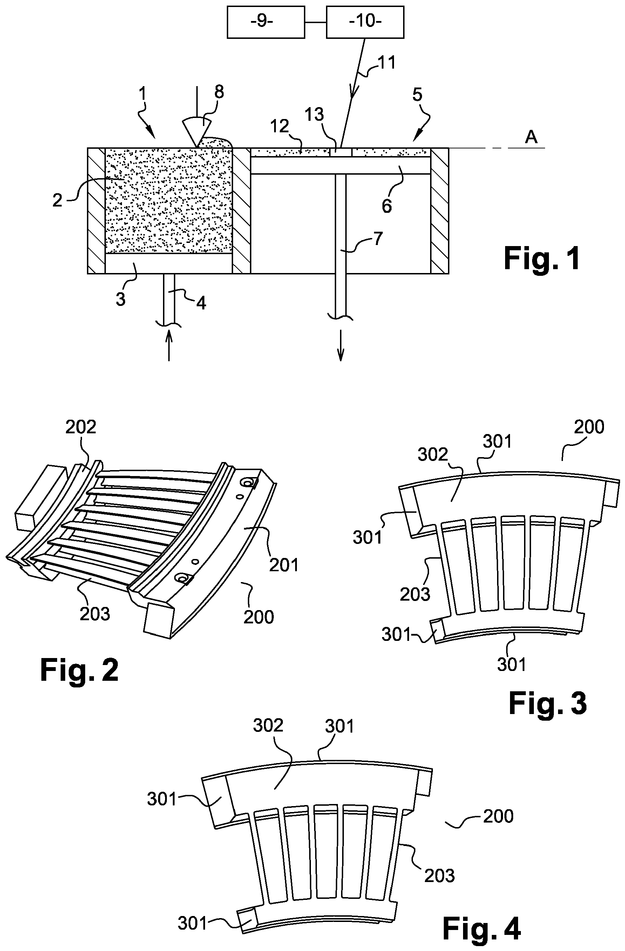

Une installation de fabrication d'une pièce métallique par fusion sélective d'une poudre est représentée à la figure 1. Une telle installation est avantageusement utilisée pour la mise en ouvre du procédé selon l'invention, pour la fabrication d'éléments de faible épaisseur présents dans la pièce considérée.

L'installation représentée comporte un réservoir 1 contenant une poudre métallique 2 et dont le fond 3 est mobile et déplaçable en translation par une tige 4 d'un vérin, et une cuve voisine 5 dont le fond est constitué par un plateau mobile 6, également déplaçable en translation par une tige 7 d'un vérin. L'installation comporte en outre un racleur 8 permettant d'amener de la poudre du réservoir 1 vers la cuve 5, par déplacement le long d'un plan horizontal A, et des moyens 9 de génération d'un faisceau laser ou d'un faisceau d'électrons, couplés à un dispositif 10 permettant d'orienter et de déplacer le faisceau 11.

Les étapes de fabrication d'une pièce métallique à l'aide de cette installation sont les suivantes. Tout d'abord, le fond 3 du réservoir 1 est déplacé vers le haut de manière à ce qu'une certaine quantité de poudre 2 soit située au-dessus du plan horizontal A. Le racleur 8 est alors déplacé de la gauche vers la droite, de manière à racler ladite couche de poudre 2 issue du réservoir 1 et l'amener dans la cuve 5. La quantité de poudre 2 et la position du plateau 6 sont déterminées de façon à former une couche 12 de poudre d'une épaisseur choisie et constante. Un faisceau laser ou un faisceau d'électrons 11 balaye ensuite une zone déterminée de la couche 12 formée dans la cuve 5, de manière à fusionner localement la poudre 2, dans la zone balayée. Les zones fondues se solidifient de manière à former une première couche 13 de la pièce à fabriquer, cette couche 13 ayant par exemple une épaisseur de 20 à 100 µm (micromètres). Le plateau 6 est alors descendu puis une seconde couche de poudre 2 est amenée, de la même manière que précédemment, sur la première couche de poudre. Par déplacement contrôlé du faisceau 11, une seconde couche de la pièce métallique est formée sur la première couche 13.

Ces opérations sont répétées jusqu'à la réalisation complète de la pièce. Dans le cas où la pièce est construite couche par couche par fusion sélective de la poudre 2 à l'aide d'un faisceau laser, la poudre 2 présente une granulométrie moyenne comprise entre 10 et 50 µm. Dans le cas où la pièce est construite couche par couche par fusion sélective de la poudre 2 à l'aide d'un faisceau d'électrons, la poudre 2 présente une granulométrie moyenne comprise entre 50 et 100 µm.

La figure 2 montre un exemple de pièce métallique 200 fabricable par la mise en oeuvre du procédé selon l'invention.

La pièce métallique 200 est dans l'exemple représenté une portion d'une turbine basse pression d'un turboréacteur d'aéronef. Le procédé selon l'invention est toutefois susceptible de s'appliquer à toute pièce métallique présentant des éléments de faible épaisseur et des éléments d'épaisseur importante.

On désigne par l'expression "pièce de faible épaisseur" une pièce présentant une épaisseur comprise entre 0,3 et 4 millimètres. Les éléments d'épaisseur importante sont alors les éléments présentant une épaisseur supérieure à 4 millimètres.

La pièce métallique 200 présente ainsi une première virole 201, dite virole externe, et une deuxième virole 202, dite virole interne, la première virole 201 et la deuxième virole 202 formant des plateformes reliées entre elles par des pales 203 formant rayon de raccordement entre les plateformes.

Dans le procédé selon l'invention, on propose de fabriquer par fusion sélective, par exemple selon le procédé décrit à la figure 1, d'une part les parties peu épaisses de la pièce métallique 200 - ici les pales 203 - et d'autre part une partie périphérique 301, visible aux figures 3 et 4, dite peau, des parties plus épaisses - ici les viroles 201 et 202.

La pièce est ainsi fabriquée dans son intégralité, par des passages successifs d'un faisceau laser ou d'un faisceau à électrons, mais ces passages ne sont réalisés qu'aux endroits formant la peau 301 ; le volume intérieur à la peau ainsi créé est rempli de poudre non transformée par le passage du faisceau.

La peau 301 présente alors une épaisseur de quelques millimètres, typiquement 2 à 4 millimètres sur le contour des parties épaisses de la pièce. Les figures 3 et 4 montrent différentes étapes de la fabrication de la peau 301, qui est faite simultanément à la fabrication des pales 203 selon le procédé illustré à la figure 1.

Une fois la peau achevée, on procède à une opération de vidage de la poudre non solidifiée par le passage du faisceau. Cette opération est réalisée en retirant la poudre par une face de chaque virole non fermée par une partie rendue solide suite au passage du faisceau, ou alors par des ouvertures laissées présentes dans le cas où la peau 301 forme un volume fermé.

Suit ensuite une étape de remplissage d'un volume intérieur 302 laissé vide, délimité par la peau. Le remplissage est réalisé au moyen de métal porté à une température suffisante pour qu'il soit sous forme liquide, soit par la face non fermée de chaque virole, soit par les ouvertures laissées présentes dans le cas où la peau 301 forme un volume fermé. La peau 301 sert alors de moule, ou de bac de rétention. Elle est complétée jusqu'à ce que le volume intérieur 302 soit totalement comblé. La peau 301 fera partie intégrante de la pièce finale 200.

On fait alors refroidir la pièce 200, par exemple en la laissant reposer à température ambiante ; le métal liquide se solidifie alors, pour former un ensemble compact.

Le procédé selon l'invention permet d'utiliser les avantages de la technique de fusion sélective par laser ou par faisceau d'électrons (avec une grande flexibilité d'utilisation et la non nécessité d'un outillage spécifique), et les avantages de la fonderie (avec une rapidité de solidification, une facilité de remplissage et un coût de fabrication faible) tout en n'étant pas confronté aux inconvénients de ces deux techniques, à savoir, pour la technique de fusion sélective, un temps de balayage trop important pour les fortes sections massives et le risque de créer des défauts à cause des éjections provenant du bain liquide, et pour la fonderie, la nécessité de fabriquer un moule pour chaque configuration et géométrie de pièce métallique.

La durée et les coûts de fabrication sont ainsi réduits.

Dans un exemple de réalisation, les matériaux utilisés pour ce type de pièces sont généralement des superalliages base nickel, comme le René 77, l'IN100, le DS200 ou l'AM1.

## Revendications

1. - Procédé de fabrication d'une pièce métallique (200), ladite pièce (200) comportant un premier ensemble d'éléments (203) présentant une épaisseur faible, comprise entre 0,3 millimètre et 4 millimètres, et un deuxième ensemble d'éléments (201 ; 202) présentant une épaisseur importante, supérieure à quatre millimètres, la pièce métallique étant une pièce de turboréacteur d'aéronef, **caractérisé en ce qu'**il comporte les différentes étapes consistant à :
- former une partie périphérique (301) des éléments (201 ; 202) du deuxième ensemble d'éléments par fusion sélective d'une poudre métallique par balayage de la surface de la couche de poudre avec un faisceau laser ou avec un faisceau d'électrons ;
- utiliser la partie périphérique (301) des éléments (201 ; 202) du deuxième ensemble d'éléments comme un moule en réalisant une opération de remplissage, avec du métal liquide, d'une zone intérieure (302) limitée par ladite partie périphérique (301) ;
- refroidir la pièce métallique (200) pour rendre solide la zone intérieure (302), limitée par la partie périphérique (301), remplie de métal.

2. - Procédé selon la revendication précédente **caractérisé en ce qu'**il comporte l'étape supplémentaire consistant à former les éléments (203) du premier ensemble d'éléments par fusion sélective d'une poudre métallique par balayage de la surface de la couche de poudre avec le faisceau laser ou avec le faisceau d'électrons.

3. - Procédé selon la revendication précédente **caractérisé en ce que** l'étape consistant à former la partie périphérique (301) des éléments (201 ; 202) du deuxième ensemble d'éléments et l'étape consistant à former les éléments (203) du premier ensemble d'éléments sont réalisées avant l'opération de remplissage de la zone intérieure (302) limitée par la partie périphérique (301) des éléments (201 ; 202) du deuxième ensemble d'éléments.

4. - Procédé selon l'une quelconque des revendications précédentes **caractérisé en ce que** la partie périphérique (301) des éléments (201 ; 202) du deuxième ensemble d'éléments formée par fusion sélective de poudre définit un volume ouvert.

5. - Procédé selon l'une quelconque des revendications 1 à 3 **caractérisé en ce que** la partie périphérique (301) des éléments (201 ; 202) du deuxième ensemble d'éléments formée par fusion sélective de poudre définit un volume fermé présentant au moins un orifice.

6. - Procédé selon l'une quelconque des revendications précédentes **caractérisé en ce qu'**il comporte l'étape supplémentaire consistant à, préalablement à l'opération de remplissage de la zone intérieure (302) limitée par la partie périphérique (301) des éléments (201 ; 202) du deuxième ensemble d'éléments, retirer la poudre non utilisée lors de l'étape de formation de la partie périphérique (301) des éléments (203) du deuxième ensemble d'éléments par fusion sélective de ladite poudre.

7. - Procédé selon l'une quelconque des revendications précédentes **caractérisé en ce que** les éléments (201 ; 202) du deuxième ensemble d'éléments sont des plateformes d'une turbine de compresseur de turbomachine pour aéronefs et **en ce que** les éléments (203) du premier ensemble d'éléments sont des pales formant rayons de raccordement entre lesdites plateformes.

## Patentansprüche

1. Herstellungsverfahren eines Metallstücks (200), wobei das genannte Metallstück (200) eine erste Gruppe von Elementen (203) umfasst, die eine geringe, zwischen 0,3 Millimetern und 4 Millimetern inbegriffene Dicke aufweist, und eine zweite Gruppe von Elementen (201; 202), die eine große Dicke aufweist, die um vier Millimeter dicker ist, wobei das Metallstück ein Turbostrahltriebwerkstück eines Luftfahrzeugs ist, **dadurch gekennzeichnet, dass** es die unterschiedlichen Schritte umfasst, bestehend aus:
- dem Bilden eines umlaufenden Teils (301) der Elemente (201; 202) der zweiten Gruppe von Elementen per selektiver Fusion eines Metallpulvers per Abtasten der Fläche der Pulverschicht mit einem Laserstrahlenbündel oder mit einem Elektronenstrahlenbündel;
- dem Verwenden des umlaufenden Teils (301) der Elemente (201; 202) der zweiten Gruppe von Elementen als eine Form, durch die Realisierung einer Fülloperation eines inneren Bereichs (302) mit flüssigem Metall, der durch den genannten umlaufenden Teil (301) begrenzt ist;
- dem Abkühlen des Metallstücks (200), um den mit dem Metall gefüllten inneren Bereich (302), der durch den umlaufenden Teil (301) begrenzt ist, verfestigen zu lassen.

2. Verfahren gemäß dem voranstehenden Anspruch, **dadurch gekennzeichnet, dass** es den zusätzlichen Schritt umfasst, der in der Bildung der Elemente (203) der ersten Gruppe von Elementen per selektiver Fusion eines Metallpulvers per Abtasten der Fläche der Pulverschicht mit dem Laserstrahlenbündel oder mit dem Elektronenstrahlenbündel besteht.

3. Verfahren gemäß dem voranstehenden Anspruch, **dadurch gekennzeichnet, dass** es den Schritt umfasst, der in der Bildung des umlaufenden Teils (301) der Elemente (201; 202) der zweiten Gruppe von Elementen und dem Schritt besteht, der in der Bildung der Elemente (203) der ersten Gruppe von Elementen besteht, vor der Fülloperation des inneren Bereichs (302) realisiert sind, der durch den umlaufenden Bereich (301) der Elemente (201; 202) der zweiten Gruppe von Elementen begrenzt ist.

4. Verfahren gemäß irgendeinem der voranstehenden Ansprüche, **dadurch gekennzeichnet, dass** der umlaufende Teil (301) der Elemente (201; 202) der zweiten Gruppe von Elementen, der per selektiver Fusion des Pulvers gebildet ist, ein offenes Volumen definiert.

5. Verfahren gemäß irgendeinem der Ansprüche 1 bis 3, **dadurch gekennzeichnet, dass** er umlaufende Teil (301) der Elemente (201; 202) der zweiten Gruppe von Elementen, der per selektiver Fusion von Pulver gebildet ist, ein geschlossenes Volumen definiert, das wenigstens eine Öffnung aufweist.

6. Verfahren gemäß irgendeinem der voranstehenden Ansprüche, **dadurch gekennzeichnet, dass** es den zusätzlichen Schritt umfasst, der vor der Fülloperation des inneren Bereichs (302), der durch den umlaufenden Teil (301) der Elemente (201; 202) der zweiten Gruppe von Elementen begrenzt ist, in dem Entfernen des nicht verwendeten Pulvers in dem Bildungsschritt des umlaufenden Teils (301) der Elemente (203) der zweiten Gruppe von Elementen per selektiver Fusion des genannten Pulvers besteht.

7. Verfahren gemäß irgendeinem der voranstehenden Ansprüche, **dadurch gekennzeichnet, dass** die Elemente (201; 202) der zweiten Gruppe von Elementen Plattformen einer Verdichterturbine einer Turbomaschine für Luftfahrzeuge sind und dass die Elemente (203) der ersten Gruppe von Elementen Rotorblätter sind, die Anschlussradien zwischen den genannten Plattformen bilden.

## Claims

1. A method for manufacturing a metal part (200), said part (200) including a first set of elements (203) having a small thickness, between 0.3 millimetres and 4 millimetres, and a second set of elements (201; 202) having a large thickness, greater than four millimetres, the metal part being an aircraft turbojet part, **characterised in that** it includes the different steps of:
- forming a peripheral portion (301) of the elements (201; 202) of the second set of elements by selective melting of a metal powder by scanning a surface of the powder layer with a laser beam or with an electron beam;
- using the peripheral portion (301) of the elements (201; 202) of the second set of elements as a mould by performing an operation of filling, with liquid metal, an inside area (302) limited by said peripheral portion (301);
- cooling the metal part (200) to make strong the inside area (302), limited by the peripheral portion (301), filled with metal.

2. The method according to the previous claim, **characterised in that** it includes a further step of forming elements (203) of the first set of elements by selective melting of a metal powder by scanning the surface of the powder layer with the laser beam or with the electron beam.

3. The method according to the previous claim, **characterised in that** the step of forming the peripheral portion (301) of the elements (201; 202) of the second set of elements and the step of forming the elements (203) of the first set of elements are performed before the operation of filling the inside area (302) limited by the peripheral portion (301) of the elements (201; 202) of the second set of elements.

4. The method according to any of the previous claims, **characterised in that** the peripheral portion (301) of the elements (201; 202) of the second set of elements formed by selective melting of powder defines an open volume.

5. The method according to any of claims 1 to 3, **characterised in that** the peripheral portion (301) of the elements (201; 202) of the second set of elements formed by selective melting of powder defines a closed volume having at least one hole.

6. The method according to any of the previous claims, **characterised in that** it includes the further steps of, prior to the operation of filling the inside area (302) limited by the peripheral portion (301) of the elements (201; 202) of the second set of elements, removing non-used powder during the step of forming the peripheral portion (301) of the elements (203) of the second set of elements by selective melting of said powder.

7. The method according to any of the previous claims, **characterised in that** the elements (201; 202) of the second set of elements are platforms of a compressor turbine for aircraft turbomachines and **in that** the elements (203) of the first set of elements are blend radius-forming blades between said platforms.
